# EUROPEAN PATENT APPLICATION

(11) **EP 4 325 181 A1**
(43) Date of publication of application: **21.02.2024**
(21) Application number: 22787957.4
(22) Date of filing: 23.03.2022
(51) Int. Cl.: G01H 11/06, A41D 19/015, G06F 3/01

(54) **WEARABLE SENSING DEVICE**

(30) Priority: 12.04.2021 JP 2021067343
(71) Applicant: Panasonic Intellectual Property Management Co., Ltd., Osaka 571-0057 (JP)
(72) Inventor: KUNIMOTO, Hiroshi, Kadoma-shi, Osaka 571-0057 (JP); UEDA, Takeshi, Kadoma-shi, Osaka 571-0057 (JP); NAKAO, Suguru, Kadoma-shi, Osaka 571-0057 (JP); TASAKA, Kei, Kadoma-shi, Osaka 571-0057 (JP); MAKI, Kunihiro, Kadoma-shi, Osaka 571-0057 (JP); IWAMOTO, Yuki, Kadoma-shi, Osaka 571-0057 (JP)
(74) Representative: Eisenführ Speiser
(86) International application number: PCT/JP2022/013498
(87) International publication number: WO 2022/220032

(57) **Abstract**

A wearable sensing device includes: a sensor provided on clothing worn by a worker wearing conductive work clothes; and an electronic device connected to the sensor. The electronic device includes a ground connection part that makes contact with the conductive work clothes to be electrically connected to the conductive work clothes.

## Description

### TECHNICAL FIELD

The present disclosure relates to a wearable sensing device.

### BACKGROUND ART

For example, PTL 1 discloses a wearable sensing device including a glove, a plurality of strain sensors provided on a wrist portion and a finger portion of a glove, and a communication module that transmits detection results of the strain sensors to an external device. The strain sensor and the communication module are connected by wiring integrally provided on the glove.

### Citation List

### Patent Literature

PTL 1: Unexamined Japanese Patent Publication No. 2017-61770

### SUMMARY OF THE INVENTION

Meanwhile, in a case of the wearable sensing device described in PTL 1, there is a case where accurate sensing cannot be performed due to mixing of noise, generation of static electricity, and the like.

Therefore, an object of the present disclosure is to suppress decrease in sensing accuracy due to noise mixing, generation of static electricity, and the like, in a wearable sensing device including a sensor.

In order to solve the above problem, according to one aspect of the present disclosure, a wearable sensing device includes: a sensor provided on clothing worn by a worker wearing conductive work clothes; and an electronic device connected to the sensor. The electronic device includes a ground connection part that makes contact with the conductive work clothes to be electrically connected to the conductive work clothes.

According to the present disclosure, in a wearable sensing device including a sensor, decrease in sensing accuracy due to noise mixing, generation of static electricity, and the like can be suppressed.

### BRIEF DESCRIPTION OF THE DRAWINGS

Fig. 1 is a schematic configuration diagram of a work determination device according to a first exemplary embodiment of the present disclosure.
Fig. 2 is a diagram illustrating a wearable sensing device with a sensor unit removed.
Fig. 3 is an upper perspective view of the sensor unit.
Fig. 4 is a lower perspective view of the sensor unit.
Fig. 5 is an exploded perspective view of the sensor unit.
Fig. 6 is an equivalent circuit diagram of the wearable sensing device.
Fig. 7A is a partial cross-sectional view illustrating a state immediately before the sensor unit is fixed to a glove.
Fig. 7B is a partial cross-sectional view illustrating a state in which the sensor unit is fixed to the glove.
Fig. 8 is a diagram illustrating a communication module in a state of being worn by a worker.
Fig. 9 is a partial cross-sectional view illustrating a state immediately before the sensor unit is fixed to the glove in a wearable sensing device according to a second exemplary embodiment of the present disclosure.
Fig. 10 is a partial cross-sectional view illustrating a state in which the sensor unit is fixed to the glove in a wearable sensing device according to a third exemplary embodiment of the present disclosure.
Fig. 11 is a partial cross-sectional view illustrating a state in which the sensor unit is fixed to the glove in a wearable sensing device according to a fourth exemplary embodiment of the present disclosure.
Fig. 12 is a diagram illustrating a communication module in a state of being worn by the worker in a wearable sensing device according to a fifth exemplary embodiment of the present disclosure.

### DESCRIPTION OF EMBODIMENT

Exemplary embodiments will be described in detail below with reference to the drawings as appropriate. However, descriptions more in detail than necessary may be omitted. For example, the detailed descriptions of already well-known matters and overlap descriptions of substantially the same configurations may be omitted. This is to avoid an unnecessarily redundant description below and to facilitate understanding by those skilled in the art.

Note that the inventors of the present disclosure provide the appended drawings and the following description with an intention to allow those skilled in the art to fully understand the present disclosure, and do not intend to limit the subject matter described in the appended claims in any way.

### (First exemplary embodiment)

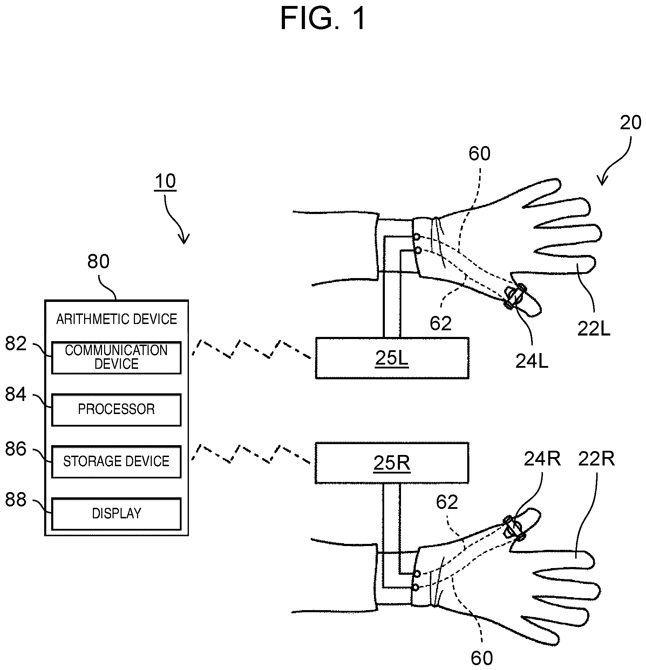

Fig. 1 is a schematic configuration diagram of a work determination device according to a first exemplary embodiment of the present disclosure.

As illustrated in Fig. 1, work determination device 10 according to the first exemplary embodiment includes wearable sensing device 20 that detects a phenomenon caused by manual work of a worker, and arithmetic device 80 that determines whether a result of the manual work of the worker is good or bad on the basis of a detection result of wearable sensing device 20. Note that in a case of the first exemplary embodiment, the manual work is work performed by the worker using both hands, and is work in which vibration is generated by the work. For example, the manual work is a fitting operation of fitting a harness connector of an automobile, and the fitting result is determined.

As illustrated in Fig. 1, wearable sensing device 20 includes left hand glove 22L worn on a worker's left hand, right hand glove 22R worn on a worker's right hand, sensor unit 24L attached to glove 22L, sensor unit 24R attached to glove 22R, communication module 25L electrically connected to sensor unit 24L, and communication module 25R electrically connected to sensor unit 24R. Note that in Fig. 1, back sides of gloves 22L and 22R are illustrated.

Arithmetic device 80 is an external device for wearable sensing device 20, and is, for example, a PC. Arithmetic device 80 includes communication device 82 that communicates with communication modules 25L and 25R of wearable sensing device 20, processor 84 such as a CPU, storage device 86 such as an HDD or an SSD that stores a program and the like for operating processor 84, and display 88 that is an output device.

First, a configuration of wearable sensing device 20 will be described. Note that, in wearable sensing device 20, components to be worn on the worker's left hand and components to be worn on the worker's right hand are substantially the same. Therefore, components of wearable sensing device 20 worn on the left hand will be described, and description of components of wearable sensing device 20 worn on the right hand will be omitted.

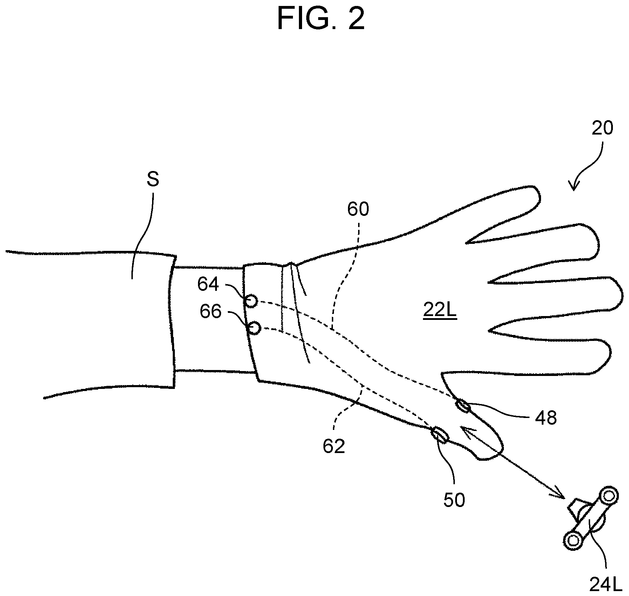

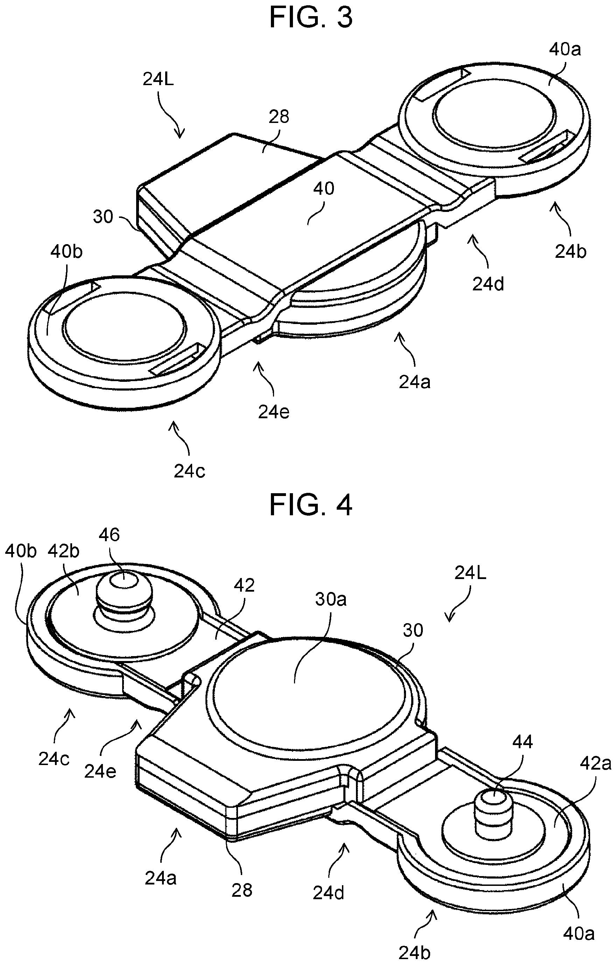

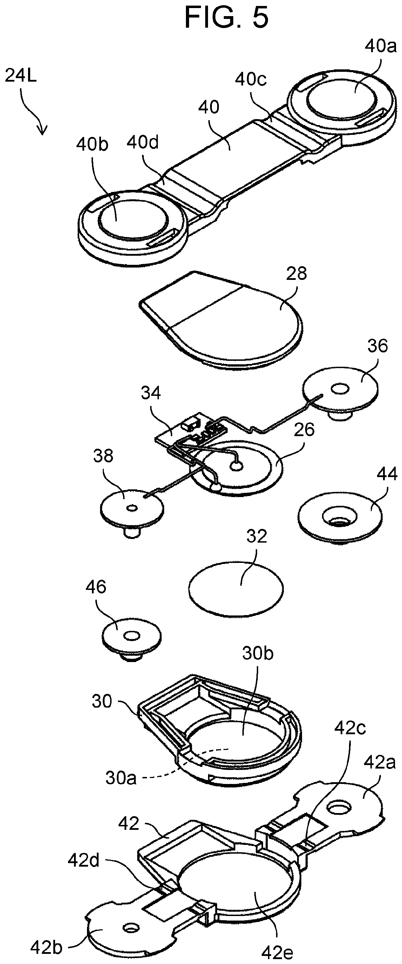

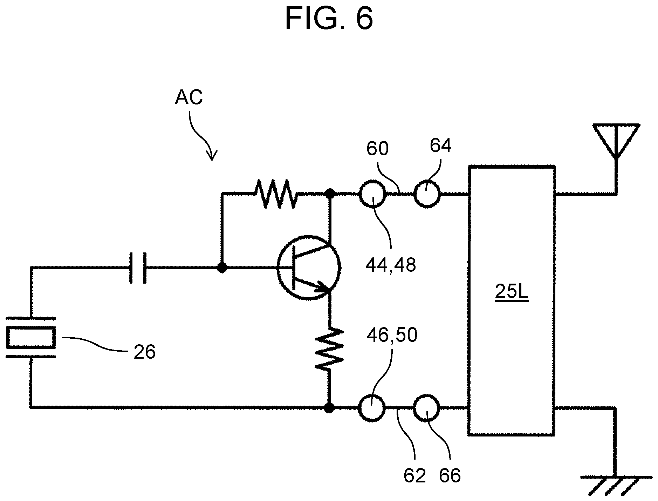

Fig. 2 is a diagram illustrating a wearable sensing device with a sensor unit removed. Fig. 3 is an upper perspective view of the sensor unit, and Fig. 4 is a lower perspective view of the sensor unit. Fig. 5 is an exploded perspective view of the sensor unit. Fig. 6 is an equivalent circuit diagram of the wearable sensing device.

As illustrated in Fig. 2, glove 22L and sensor unit 24L are configured to be detachable from each other although details will be described later. In the case of the first exemplary embodiment, sensor unit 24L is attached to a root of a portion into which a thumb is inserted (thumb) of glove 22L. As a result, sensor unit 24L detects vibration generated by manual work and propagated to a left thumb of the worker. Note that in the present disclosure, a portion to which the sensor unit is attached is not limited to the root of the thumb. In other words, the sensor unit may be attached to a root or a tip of a portion into which another finger is inserted. The sensor unit may be attached to a back of a hand. However, in a case of being attached to the root of the thumb, vibration and other sensing data can be more favorably detected at that portion. Therefore, there is an advantage that sensing can be performed more favorably in the above-described case than in a case of being attached to another portion.

As illustrated in Figs. 3 and 4, sensor unit 24L includes: body 24a, first and second bracket parts 24b, 24c fixed to glove 22L, and first and second hinge parts 24d, 24e respectively coupling body 24a and first and second bracket parts 24b, 24c.

As illustrated in Figs. 3 and 4, body 24a of sensor unit 24L is disposed between first bracket part 24b and second bracket part 24c. Note that although details will be described later, body 24a is not fixed to glove 22L, and first bracket part 24b and second bracket part 24c are fixed to glove 22L.

As illustrated in Fig. 5, in the case of the first exemplary embodiment, vibration sensor 26 that detects vibration generated by manual work and propagated to the left thumb of the worker is mounted on body 24a. Vibration sensor 26 is, for example, a capacitance sensor, and outputs an electric signal corresponding to the detected vibration. In the case of the first exemplary embodiment, body 24a of sensor unit 24L includes upper housing 28 and lower housing 30 engaged with upper housing 28. Vibration sensor 26 is disposed in a space formed by upper housing 28 and lower housing 30.

Upper housing 28 and lower housing 30 are made of a relatively hard resin material such as ABS or PC. In addition, as illustrated in Fig. 4, contact surface 30a facing skin of the worker via glove 22L is formed on an outer surface of lower housing 30. As illustrated in Fig. 5, vibration sensor 26 is attached to portion 30b of an inner surface of lower housing 30 opposite to contact surface 30a via adhesive seal 32.

As illustrated in Fig. 5, in the case of the first exemplary embodiment, circuit board 34 electrically connected to vibration sensor 26 is mounted on body 24a. A plurality of circuit elements such as a resistor and a capacitor constituting amplifier circuit AC illustrated in Fig. 6 is mounted on circuit board 34. Amplifier circuit AC electrically connects vibration sensor 26 and communication module 25L. As a result, amplifier circuit AC drives vibration sensor 26 using power of a battery (not illustrated) in communication module 25L, and amplifies an electric signal output from vibration sensor 26, to output the amplified electric signal to communication module 25L.

Circuit board 34 is electrically connected to electrodes 36, 38. Electrodes 36, 38 are provided on first and second bracket parts 24b, 24c of sensor unit 24L. In the case of the first exemplary embodiment, as illustrated in Fig. 5, sensor unit 24L includes upper strip 40 and lower strip 42 that sandwich to support body 24a (upper housing 28 and lower housing 30).

Upper strip 40 and lower strip 42 are made of a relatively soft elastic material, for example an elastomer. Note that upper housing 28 and upper strip 40 may be formed by two-color molding, and similarly, lower housing 30 and lower strip 42 may be formed by two-color molding.

As illustrated in Fig. 5, electrode 36 is disposed between one circular end 40a of upper strip 40 and one circular end 42a of lower strip 42. That is, as illustrated in Fig. 4, first bracket part 24b includes one circular end 40a of upper strip 40 and one circular end 42a of lower strip 42. Electrode 38 is disposed between other circular end 40b of upper strip 40 and other circular end 42b of lower strip 42. That is, second bracket part 24c includes other circular end 40b of upper strip 40 and other circular end 42b of lower strip 42.

As illustrated in Fig. 5, upper strip 40 is formed with two thin portions 40c, 40d. Similarly, lower strip 42 is formed with two thin portions 42c, 42d. One thin portion 40c of upper strip 40 and one thin portion 42c of lower strip 42 face each other, and thus form first hinge part 24d of sensor unit 24L. One thin portion 40d of upper strip 40 and one thin portion 42d of lower strip 42 face each other, and thus form second hinge part 24e of sensor unit 24L.

Furthermore, through hole 42e for exposing contact surface 30a of lower housing 30 is formed in lower strip 42.

As illustrated in Fig. 5, sensor unit 24L also includes first sensor-side connection terminal 44 electrically connected to electrode 36 and second sensor-side connection terminal 46 electrically connected to electrode 38. As illustrated in Fig. 4, first sensor-side connection terminal 44 is provided on first bracket part 24b, and second sensor-side connection terminal 46 is provided on second bracket part 24c. Connection terminals electrically connected to these first and second sensor-side connection terminals 44 and 46 are provided on glove 22L.

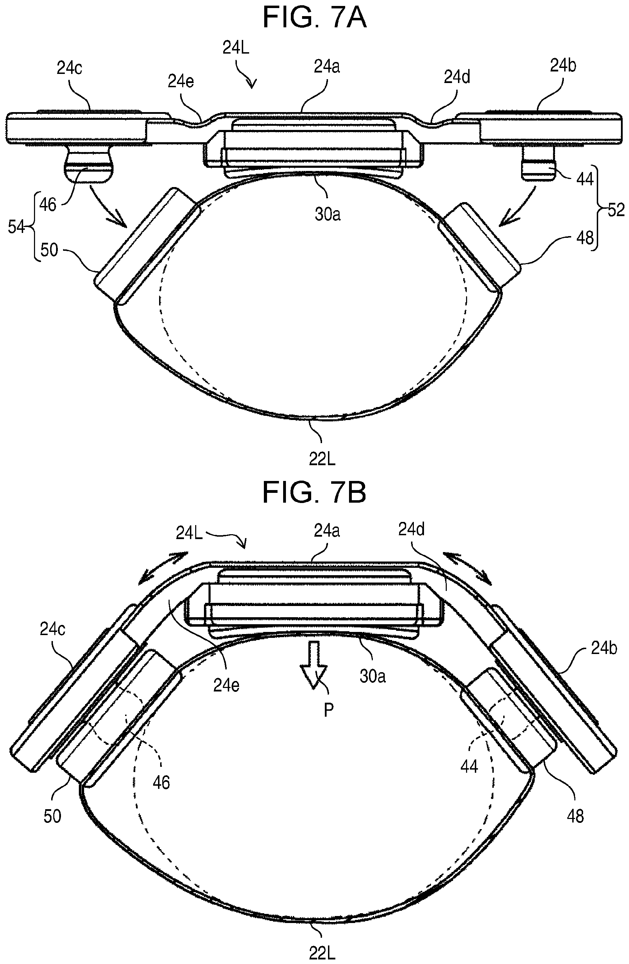

Fig. 7A is a partial cross-sectional view illustrating a state immediately before the sensor unit is fixed to a glove. Fig. 7B is a partial cross-sectional view illustrating a state in which the sensor unit is fixed to the glove. In Figs. 7A and 7B, a two-dot chain line indicates the thumb of the worker.

As illustrated in Figs. 7A and 7B, glove 22L is provided with first glove-side connection terminal 48 electrically connected to first sensor-side connection terminal 44 provided on first bracket part 24b of sensor unit 24L. In addition, glove 22L is provided with second glove-side connection terminal 50 electrically connected to second sensor-side connection terminal 46 provided on second bracket part 24c.

As illustrated in Figs. 2 and 7A, first glove-side connection terminal 48 and second glove-side connection terminal 50, with the thumb of the worker being positioned therebetween when glove 22L is worn, are provided on a side surface of a root of a thumb of glove 22L. That is, glove 22L is provided with first glove-side connection terminal 48 and second glove-side connection terminal 50 that sandwich a portion of glove 22L facing body 24a of sensor unit 24L.

As illustrated in Figs. 7A and 7B, first sensor-side connection terminal 44 and first glove-side connection terminal 48 are configured to be detachably engaged with each other. That is, first glove-side connection terminal 48 functions as a first sensor attachment part to which first bracket part 24b of sensor unit 24L provided with first sensor-side connection terminal 44 is attached.

In the case of the first exemplary embodiment, first sensor-side connection terminal 44 and first glove-side connection terminal 48 are first snap buttons 52 made of a conductive material such as a metal material. For example, a male-side button of first snap button 52 is first sensor-side connection terminal 44, and a female-side button is first glove-side connection terminal 48. Therefore, first sensor-side connection terminal 44 and first glove-side connection terminal 48 are electrically connected and detachably engaged with each other. Note that first sensor-side connection terminal 44 may be the female-side button of first snap button 52, and first glove-side connection terminal 48 may be the male-side button thereof.

Similarly, as illustrated in Figs. 7A and 7B, second sensor-side connection terminal 46 and second glove-side connection terminal 50 are configured to be detachably engaged with each other. That is, second glove-side connection terminal 50 functions as a second sensor attachment part to which second bracket part 24c of sensor unit 24L provided with second sensor-side connection terminal 46 is attached.

In the case of the first exemplary embodiment, second sensor-side connection terminal 46 and second glove-side connection terminal 50 are second snap buttons 54 made of a metal material. For example, a male-side button of second snap button 54 is second sensor-side connection terminal 46, and a female-side button is second glove-side connection terminal 50. Therefore, second sensor-side connection terminal 46 and second glove-side connection terminal 50 are electrically connected and detachably engaged with each other. Note that second sensor-side connection terminal 46 may be the female-side button of second snap button 54, and second glove-side connection terminal 50 may be the male-side button thereof.

Furthermore, in the case of the first exemplary embodiment, as illustrated in Figs. 7A and 7B, first snap button 52 and second snap button 54 are different from each other. In the case of the present exemplary embodiment, their sizes are different. Specifically, first and second snap buttons 52 and 54 are different from each other, a male-side button of one snap button being not engageable with a female-side button of the other snap button. That is, first sensor-side connection terminal 44 is not engageable with second glove-side connection terminal 50, and second sensor-side connection terminal 46 is not engageable with first glove-side connection terminal 48. As a result, electrical connection between sensor unit 24L and glove 22L is normally performed, and amplifier circuit AC illustrated in Fig. 6 can operate normally. In other words, the worker can easily attach sensor unit 24L to glove 22L without hesitation, and can easily remove sensor unit 24L from glove 22L. As a method of making one male-side button of first and second snap buttons 52 and 54 not engageable with the other female-side button, a method other than making the sizes different may be adopted. For example, in a case where the respective buttons are made to have magnetism to promote coupling of the buttons, first and second snap buttons 52 and 54 may have different magnetism on the clothing side and the sensor unit side in order to make one male-side button not engageable with the other female-side button. In addition, even in a case where the sensor-side connection terminal and the glove-side connection terminal are connected by a fixing means other than the snap button, sensor unit 24L can be easily attached to glove 22L without hesitation by performing the same measure. For example, in a case where the sensor-side connection terminal and the glove-side connection terminal are fixed with a hook-and-Loop fastener or the like, male and female of the hook-and-Loop fastener may be used so as to alternate with each other similarly to the snap button of the present disclosure.

As illustrated in Fig. 7B, sensor unit 24L is attached to glove 22L in a state in which first and second hinge parts 24d and 24e are elastically deformed, that is, tension-deformed. Specifically, in a state in which first and second hinge parts 24d and 24e are elastically deformed, first bracket part 24b (first sensor-side connection terminal 44 thereof) is attached to first glove-side connection terminal 48, and second bracket part 24c (second sensor-side connection terminal 46 thereof) is attached to second glove-side connection terminal 50.

When sensor unit 24L is attached to glove 22L in this manner, restoring force of first and second hinge parts 24d and 24e generates urging force P for urging body 24a toward glove 22L (that is, the thumb of the worker who wears glove 22L). Contact surface 30a of body 24a is brought into close contact with the skin of the worker via glove 22L by the urging force P. As a result, vibration generated by the manual work and propagating through the hand of the worker is transmitted to contact surface 30a of body 24a of sensor unit 24L without loss. Then, the vibration reaches vibration sensor 26 of sensor unit 24L via contact surface 30a.

In addition, with such attachment of sensor unit 24L to glove 22L, it is possible to suppress the variation in sensing accuracy due to a difference between workers, that is, the difference in the size of the thumb of the hand of the worker in the case of the first exemplary embodiment. Specifically, even if the size of the thumb of the hand is different, contact surface 30a of sensor unit 24L can be brought into close contact with the skin of the thumb of the hand of the worker by first and second hinge parts 24d and 24e. As a result, for different workers, the vibration can be detected under the same condition, and the quality determination of the work can be performed under the same condition.

Note that in order to further enhance the adhesion between contact surface 30a and the skin of the worker, contact surface 30a of sensor unit 24L has a concave shape as illustrated in Figs. 7A and 7B in the case of the first exemplary embodiment. Specifically, contact surface 30a has a concave shape as viewed in a direction in which the thumb of the worker extends, that is, as viewed in a direction (vertical direction in the drawing) orthogonal to a facing direction of first bracket part 24b and second bracket part 24c. As a result, contact surface 30a further comes into close contact with the thumb of the hand of the worker, and the vibration reaches by vibration sensor 26 with a small loss.

With respect to a vibration transmission path to vibration sensor 26, in the case of the first exemplary embodiment, transmission of the vibration to vibration sensor 26 via first bracket part 24b and second bracket part 24c is suppressed. Specifically, since first hinge part 24d and second hinge part 24e (that is, the upper strip 40 and the lower strip 42) are made of an elastic material, these components function as dampers for absorbing vibration.

The detection result (signal corresponding to the detected vibration) of vibration sensor 26 is transmitted to communication module 25L via circuit board 34, first sensor-side connection terminal 44 and first glove-side connection terminal 48 (first snap button 52) in the engaged state, and second sensor-side connection terminal 46 and second glove-side connection terminal 50 (second snap button 54) in the engaged state. Then, communication module 25L transmits the detection result from vibration sensor 26 to arithmetic device 80.

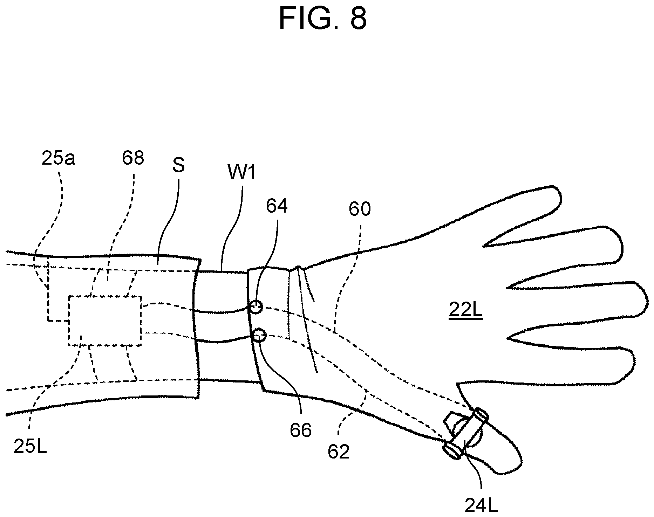

Fig. 8 is a diagram illustrating a communication module in a state of being worn by a worker.

As illustrated in Fig. 8, in the case of the first exemplary embodiment, communication module 25L is not provided on glove 22L, but is attached to arm W1 of the worker. For this purpose, conductive wires 60, 62 for electrically connecting communication module 25L and sensor unit 24L are provided on glove 22L.

Conductive wires 60, 62 are, for example, a conductive yarn, a coated metal thin wire, a strip-shaped metal thin plate, or the like, and are integrally provided on the backside of glove 22L. As illustrated in Fig. 2, one end of one conductive wire 60 is connected to first glove-side connection terminal 48, and the other end is connected to connector 64 provided at an opening edge portion of glove 22L. One end of other conductive wire 62 is connected to second glove-side connection terminal 50, and the other end is connected to connector 66. As illustrated in Fig. 8, communication module 25L is connected to connectors 64, 66.

In the case of the first exemplary embodiment, communication module 25L is worn on arm W1 of the worker via band 68 that is stretchable. Communication module 25L is connected to the ground with respect to conductive work clothes S worn by the worker. Note that the "conductive work clothes" referred to herein refer to work clothes made of a conductive material and grounded directly or via a conductive shoe.

Specifically, as illustrated in Fig. 6, communication module 25L is connected to the ground. In the case of the first exemplary embodiment, as illustrated in Fig. 8, communication module 25L includes ground connection part 25a electrically connected to conductive work clothes S. Accordingly, communication module 25L, that is, wearable sensing device 20 is grounded via conductive work clothes S. As a result, wearable sensing device 20 suppresses a decrease in sensing accuracy due to mixing of noise, generation of static electricity, or the like.

Note that in the case of the first exemplary embodiment, as illustrated in Fig. 8, communication module 25L is covered with a long sleeve of the conductive work clothes S when worn on arm W1 of the worker via band 68. This long sleeve protects communication module 25L. Note that, in this case, ground connection part 25a may be, for example, an electrode provided on a surface of a housing of communication module 25L that faces and comes into contact with conductive work clothes S.

As illustrated in Fig. 1, communication module 25L transmits the detection result of vibration sensor 26 of sensor unit 24L attached to glove 22L to arithmetic device 80. Similarly, communication module 25R transmits the detection result of vibration sensor 26 of sensor unit 24R attached to glove 22R to arithmetic device 80. Note that one of communication modules 25L, 25R may transmit the detection result to the other, and the other of communication modules 25L, 25R may collectively transmit both the detection result of vibration sensor 26 of glove 22L and detection result of vibration sensor 26 of glove 22R to arithmetic device 80.

Arithmetic device 80 receives a signal from wearable sensing device 20, that is, the detection result of vibration sensor 26 of each of sensor units 24L, 24R via communication device 82.

Processor 84 of arithmetic device 80 performs the quality determination of the result of the manual work of the worker according to a program stored in storage device 86. For example, it is determined whether or not two harness connectors are normally fitted by a fitting operation of the harness connectors of the worker.

Specifically, following the program, processor 84 performs the quality determination of the result of the manual work of the worker on the basis of both the detection result of vibration sensor 26 of sensor unit 24L attached to left hand glove 22L and the detection result of vibration sensor 26 of sensor unit 24R attached to right hand glove 22R.

For example, in a case where a difference between vibration detected by vibration sensor 26 on the left hand side and vibration detected by vibration sensor 26 on the right hand side is within a predetermined range, processor 84 determines that the result of the manual work by the worker is normal. Examples of the difference between the two vibrations include a difference between peak values of two vibration waveforms, a difference between phases of the two vibration waveforms, and a difference in similarity to a reference vibration waveform.

For example, in a case of manual work of fitting two harness connectors, one of the harness connectors is held by the left hand, and the other harness connector is held by the right hand. Due to the difference between the two harness connectors, there is a difference between vibration transmitted from one harness connector to the left hand and vibration transmitted from the other harness connector to the right hand. By using such a difference in vibration propagating between the left hand and the right hand, it is possible to execute the quality determination of the fitting result of the harness connector. When the difference between the two vibrations is out of the predetermined range, processor 84 determines that the result of the manual work by the worker is abnormal. For example, in a case where the harness connector is not normally fitted, in a case where vibration sensor 26 of at least one of the left hand and the right hand is broken, or the like, it is determined as abnormal.

By using both detection results of two vibration sensors 26 attached to both hands in this manner, it is possible to perform the quality determination of the result of the manual work by the worker with high accuracy as compared with a case where one vibration sensor is attached to one hand and only the detection result of the one vibration sensor is used. In addition, since the quality determination is based on the vibration propagating through the hand of the worker, the quality determination of the result of the manual work can be performed with high accuracy even at a work site where noise is large.

In addition, when both of the detection results of two vibration sensors 26 attached to both hands are used, there is an advantage that the following determination is also possible. That is, in a case where sensor units 24L, 24R are respectively disposed in the left and right hands, ideal behaviors of respective vibrations detected by left and right sensor units 24L, 24 R may be different from each other due to an influence of a dominant hand of the worker, or the like. For example, there is a case where a detection result expected for sensor unit 24R is A (output from the right hand peculiar to a right-handed user or output when a male terminal is held), and a detection result expected for sensor unit 24L is B (output from a left hand peculiar to the right-handed user or output when a female terminal is held). In such a case, not only in a case where the detection result of sensor unit 24R is A and the detection result of sensor unit 24L is B, but also in a case where the detection result of sensor unit 24R is B and the detection result of sensor unit 24L is A, it is determined that the fitting has been normally performed, whereby the fitting can be accurately detected even in a case where inversion of the detection result based on the dominant hand of the worker (or a habit of the way of holding a work object) has occurred.

In addition, as another advantage of using both of the detection results of two vibration sensors 26 attached to both hands, it is also possible to execute processing for improving the reliability of determination by issuing an alert in a case where there is a signal from only one of the sensors in a work requiring the work of both hands.

After executing the quality determination of the result of the manual work of the worker, processor 84 displays a result of the quality determination on display 88 that is an output device following the program. By checking the result of the quality determination displayed on display 88, the worker can know the result of the manual work. Note that the output device may be a speaker. In this case, a notification sound in a case where the result of the quality determination is normal is different from a notification sound in a case where the result is abnormal.

### (Second exemplary embodiment)

A second exemplary embodiment is different from the first exemplary embodiment described above in a method of attaching a sensor unit to a glove. This difference point will be described below.

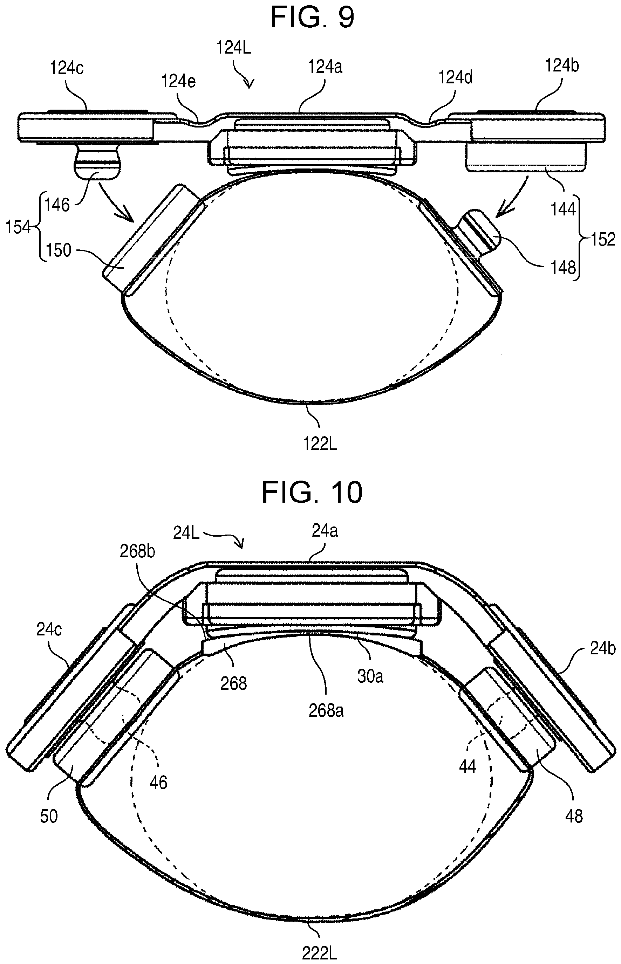

Fig. 9 is a partial cross-sectional view illustrating a state immediately before the sensor unit is fixed to the glove in a wearable sensing device according to the second exemplary embodiment of the present disclosure.

As illustrated in Fig. 9, sensor unit 124L includes first sensor-side connection terminal 144 on first bracket part 124b. In addition, glove 122L is provided with first glove-side connection terminal 148 electrically connected to first sensor-side connection terminal 144 and detachably engaged with each other. In the second exemplary embodiment, first sensor-side connection terminal 144 and first glove-side connection terminal 148 are first snap buttons 152.

Similarly, sensor unit 124L includes second sensor-side connection terminal 146 on that second bracket part 124c. In addition, glove 122L is provided with second glove-side connection terminal 150 electrically connected to second sensor-side connection terminal 146 and detachably engaged with each other. In the second exemplary embodiment, second sensor-side connection terminal 146 and second glove-side connection terminal 150 are second snap buttons 154.

In the case of the second exemplary embodiment, first snap button 152 and second snap button 154 are the same. However, first sensor-side connection terminal 144 is the female-side button of first snap button 152, and second sensor-side connection terminal 146 is the male-side button of second snap button 154. Therefore, the worker can easily attach sensor unit 124L to glove 122L without hesitation.

### (Third exemplary embodiment)

A third exemplary embodiment is different from the first exemplary embodiment described above in an attachment method between a contact surface of the sensor unit and skin of the worker. This difference point will be described below. Note that the sensor unit according to the third embodiment is substantially the same as the sensor unit according to the first exemplary embodiment described above.

Fig. 10 is a partial cross-sectional view illustrating a state in which the sensor unit is fixed to the glove in a wearable sensing device according to the third exemplary embodiment of the present disclosure.

As illustrated in Fig. 10, in the case of the third exemplary embodiment, glove 222L includes interposed member 268 in a portion facing contact surface 30a of body 24a of sensor unit 24L in a state in which sensor unit 24L is attached to glove 222L. Interposed member 268 includes contact surface 268a that comes into contact with the skin (two-dot chain line) of the thumb of the worker's left hand and engagement surface 268b that is engaged (surface contact) with contact surface 30a of sensor unit 24L.

In addition, interposed member 268 is a resin member, for example, which is harder than glove 222L and has acoustic impedance between acoustic impedance of the skin of the worker and acoustic impedance of body 24a.

Through such interposed member 268, vibration is transmitted from the skin of the worker to contact surface 30a of sensor unit 24L with a smaller loss. As a result, the vibration detection accuracy of sensor unit 24L is improved.

### (Fourth exemplary embodiment)

A fourth exemplary embodiment is different from the first exemplary embodiment described above in an attachment method between the contact surface of the sensor unit and the skin of the worker. This difference point will be described below. Note that the sensor unit according to the fourth exemplary embodiment is substantially the same as the sensor unit according to the first exemplary embodiment described above.

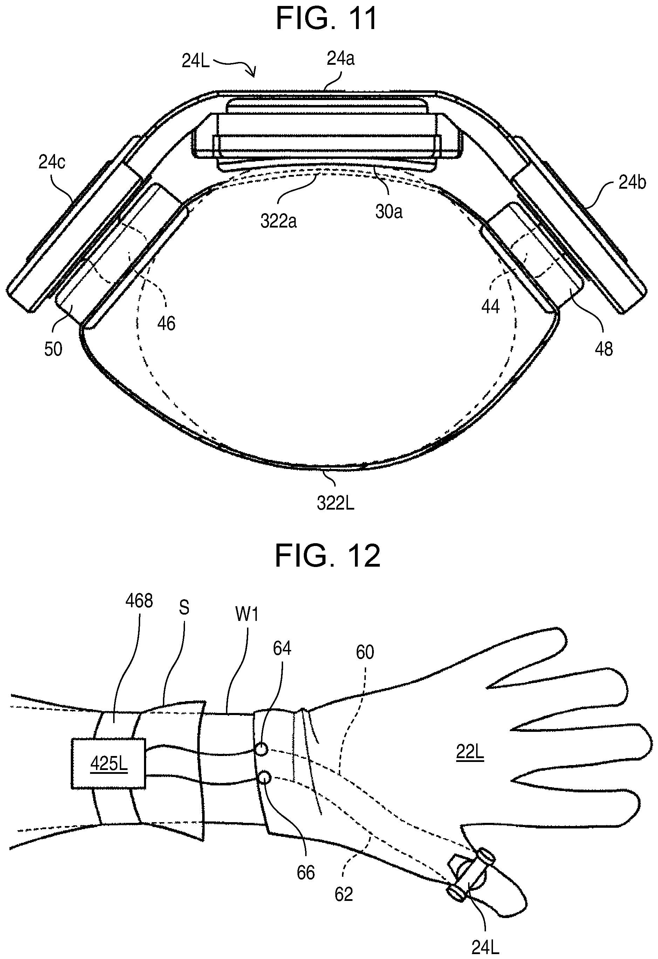

Fig. 11 is a partial cross-sectional view illustrating a state in which the sensor unit is fixed to the glove in a wearable sensing device according to the fourth exemplary embodiment of the present disclosure.

As illustrated in Fig. 11, in the case of the fourth exemplary embodiment, glove 322L includes through hole 322a in a portion facing contact surface 30a of body 24a of sensor unit 24L in a state in which sensor unit 24L is attached to glove 322L. The skin (two-dot chain line) of the thumb of the worker's left hand directly contacts contact surface 30a of body 24a through this through hole 322a.

Through presence of such through hole 322a, vibration is directly transmitted from the skin of the worker to contact surface 30a of sensor unit 24L. As a result, the vibration detection accuracy of sensor unit 24L is improved.

### (Fifth exemplary embodiment)

A fifth exemplary embodiment is different from the first exemplary embodiment described above in the attachment method of the communication module of the wearable sensing device to the worker. Note that the glove and the sensor unit according to the fifth exemplary embodiment are substantially the same as the glove and the sensor unit according to the first exemplary embodiment described above.

Fig. 12 is a diagram illustrating a communication module in a state of being worn by the worker in the wearable sensing device according to the fifth exemplary embodiment of the present disclosure.

As illustrated in Fig. 12, in the case of the fifth exemplary embodiment, communication module 425L is worn on the long sleeve of conductive work clothes S. In this case, communication module 425L is worn by the worker through conductive band 468 wound around worker's arm W1 from above the long sleeve of conductive work clothes S. In addition, conductive band 468 functions as a ground connection part electrically connected to conductive work clothes S. Accordingly, communication module 425L, that is, the wearable sensing device is grounded via conductive work clothes S. As a result, the wearable sensing device suppresses a decrease in sensing accuracy due to mixing of noise, generation of static electricity, or the like.

Although the present disclosure has been described above by taking the above-described first to fifth exemplary embodiments as examples, the present disclosure is not limited thereto.

For example, in the case of the above-described first exemplary embodiment, the sensor of the wearable sensing device 20 that detects vibration generated by the manual work of the worker is the vibration sensor 26. Vibration sensor 26 detects vibration propagating through a finger of the hand of the worker. However, the exemplary embodiment of the present disclosure is not limited thereto.

The device that detects vibration generated by the manual work of the worker may be a microphone. In this case, a microphone is mounted on the sensor unit, and the microphone detects vibration generated by the manual work of the worker via air, that is, detects generated sound.

In this case, for example, a vibration sensor is provided on a left hand glove, and the microphone is provided on a right hand glove. The arithmetic device performs quality determination on a result of the manual work of the worker on the basis of both the detection result of the vibration sensor and the detection result of the microphone. For example, the arithmetic device spectrally analyzes each of the vibration waveform of the vibration sensor and the sound waveform of the microphone, and detects a common frequency component. The common frequency component detected by both the microphone and the vibration sensor is likely to be a frequency component of vibration caused by the fitting operation. On the other hand, there is a high possibility that the frequency component detected by one of the microphone or the vibration sensor is mixed with influence of environmental sound noise mainly picked up by the microphone or rubbing vibration of clothes mainly picked up by the vibration sensor. Therefore, fitting determination can be more accurately performed by performing the quality determination of the result of the manual work on the basis of a phase difference and a difference between peak values of the common frequency component.

In addition, in the case of the above-described first exemplary embodiment, as illustrated in Fig. 1, the quality determination of the result of the manual work is executed by arithmetic device 80 such as a PC or the like away from the worker. However, the exemplary embodiment of the present disclosure is not limited thereto. For example, the quality determination of the result of the manual work may be executed by a wristwatch-type arithmetic device worn on the worker's arm. In this case, wireless communication means such as a communication module or the like that is an example of the electronic device can be omitted. That is, a wristwatch-type arithmetic device is selected instead of the communication module, as an electronic device electrically connected to the wearable sensing device.

Furthermore, in the case of the above-described first exemplary embodiment, as illustrated in Figs. 7A and 7B, sensor unit 24L (24R) is attached to glove 22L (22R) via first and second snap buttons 52 and 54. However, the exemplary embodiment of the present disclosure is not limited thereto. A sensor unit (i.e., a sensor) only need to be attached to the glove via a device that is electrically connectable and detachably engageable with one another. For example, the sensor unit may be detachably attached to the glove via a hook-and-loop fastener.

Furthermore, in the case of the above-described first to fifth exemplary embodiments, the wearable sensing device is a glove to which the sensor unit (sensor) is attached, but the exemplary embodiment of the present disclosure is not limited thereto. The wearable sensing device may be a wearable sensing device in which a sensor is attached to clothing (including accessories) worn by the user, for example, a wristband, a watch (wristwatch), an arm cover, a mask, a neck warmer, or the like. Note that the wearable sensing device may have a minimum configuration including only a sensor unit (sensor) and an electronic device connected to the sensor. In this case, the sensor is configured to be attachable to and detachable from any desired clothing. That is, first and second glove-side connection terminals 48, 50, 148, and 150 are examples of the clothing-side connection terminals.

In addition, in the case of the above-described first embodiment, as illustrated in Figs. 7A and 7B, first hinge part 24d and second hinge part 24e of sensor unit 24L are made of an elastic material, and function as hinges by being elastically deformed. However, the exemplary embodiment of the present disclosure is not limited thereto. The first hinge part and the second hinge part may be, for example, a torsion spring or a torque hinge.

That is, in a broad sense, an embodiment of the present disclosure is a wearable sensing device including: a sensor provided on clothing worn by a worker wearing conductive work clothes; and an electronic device connected to the sensor, in which the electronic device includes a ground connection part that makes contact with the conductive work clothes to be electrically connected to the conductive work clothes.

As described above, the exemplary embodiments have been described as examples of the technique in the present disclosure. Thus, the accompanying drawings and the detailed description have been provided. Therefore, in order to illustrate the above technique, the components described in the accompanying drawings and the detailed description may include not only components that are essential for solving problems but also components that are unessential for solving the problems. For this reason, it should not be immediately construed that those non-essential components are essential only based on the fact that those non-essential components are illustrated in the accompanying drawings or described in the detailed description.

In addition, since the above-described exemplary embodiments are intended to exemplify the technique according to the present disclosure, various modifications, replacements, additions, and omissions can be made within the scope of the appended claims or of their equivalents.

### INDUSTRIAL APPLICABILITY

The present disclosure is applicable to clothing including a sensor, that is, a wearable sensing device.

### REFERENCE MARKS IN THE DRAWINGS

20: wearable sensing device
22L, 22R, 122L, 222L, 322L: glove
24L, 24R, 124L: sensor unit
25L, 25R, 425L: communication module
25a: ground connection part
26: vibration sensor
68: band
80: arithmetic device
468: conductive band
S: conductive work clothes

## Claims

1. A wearable sensing device comprising:
a sensor provided on clothing worn by a worker wearing conductive work clothes; and
an electronic device connected to the sensor,
wherein the electronic device includes a ground connection part that makes contact with the conductive work clothes to be electrically connected to the conductive work clothes.

2. The wearable sensing device according to Claim 1, wherein
the conductive work clothes include a long sleeve, and
the electronic device is attached to a worker's arm that is under the long sleeve of the conductive work clothes by a band.

3. The wearable sensing device according to Claim 1, wherein
the conductive work clothes include a long sleeve, and
the ground connection part is a conductive band that is wound around the worker's arm from above the long sleeve of the conductive work clothes.

4. The wearable sensing device according to Claim 1, wherein
the clothing is a glove, and
the sensor unit is attached to a thumb of the glove.

5. The wearable sensing device according to Claim 1, wherein the electronic device is a communication module that transmits a detection result of the sensor to an external device.

6. The wearable sensing device according to Claim 1, wherein the sensor is a vibration sensor or a microphone.
